# FASCICULE DE BREVET EUROPEEN

(11) **EP 0 426 565 B1**
(45) Date de publication et mention de la délivrance du brevet: **19.05.1993**
(21) Numéro de dépôt: 90403084.8
(22) Date de dépôt: 31.10.1990
(51) Int. Cl.: B60R 19/18, B60R 19/26

(54) **Pare-chocs de véhicules automobiles comportant des moyens d'absorption d'énergie**
Kraftfahrzeugstossfänger mit energieabsorbierenden Mitteln
Bumper for motor vehicle including energy absorbing means

(30) Priorité: 02.11.1989 FR 8914362
(43) Date de publication de la demande: 08.05.1991
(73) Titulaire: AUTOMOBILES PEUGEOT, 75116 Paris (FR); AUTOMOBILES CITROEN, 92200 Neuilly-sur-Seine (FR)
(72) Inventeur: Dossin, Jacques, F-92400 Courbevoie (FR)
(74) Mandataire: Fabien, Henri

(56) Documents cités:
- EP-A- 0 266 642
- FR-A- 2 536 711
- US-A- 2 135 749

## Description

L'invention a pour objet un dispositif de pare-chocs pour véhicules automobiles comportant des moyens absorbeurs d'énergie, tel que défini dans le préambule de la revendication 1. Un tel pare-chocs est connu par le document FR-A-2 536 711.

On connait des pare-chocs comportant un élément de structure en matériau composite, monté sur la structure de la caisse du véhicule et recouvert d'un élément de présentation extérieure de manière à assurer l'esthétisme et l'aérodynamisme du pare-chocs.

L'élément de structure est alors constitué par une poutre réalisée de deux pièces distinctes assemblées, en matières composites différentes, et pouvant présenter des cavités.

L'invention a pour but de réaliser un pare-chocs dont l'élément de structure est constitué par une seule pièce creuse fermée et intégrant les moyens d'absorption d'énergie.

L'invention concerne donc un pare-chocs pour véhicules automobiles constitué d'une part par un élément de structure en matière composite et destiné à être monté par une face d'appui sur la structure de la caisse de véhicule et d'autre part par un élément extérieur solidaire de l'élément de structure et destiné à assurer la présentation esthétique et aérodynamique du pare-chocs, où l'élément de structure est constitué par au moins une pièce creuse fermée présentant sur sa face d'appui sur la structure de caisse du véhicule et sur la face opposée des déformations tronconiques, ces déformations étant coaxiales deux à deux, caractérisé en ce que elles sont orientées dans le même sens, de manière que les déformations de la face opposée à la face d'appui pénètrent à l'intérieur des déformations de la face d'appui.

Selon un mode préféré de l'invention, l'élément de structure est constitué par une poutre transversale dans laquelle sont répartis plusieurs ensembles de déformations tronconiques.

Selon un autre mode de l'invention, la poutre est fractionnée en plusieurs pièces comportant un et/ou deux ensembles de déformations tronconiques.

D'autres caractéristiques et avantages de l'invention apparaîtront mieux dans la description détaillée qui suit et se réfère aux dessins annexés donnés uniquement à titre d'exemple, et dans lesquels:
- la Figure 1 est une vue éclatée du pare-chocs;
- la Figure 2 et une vue en perspective de l'élément de structure selon un autre mode de réalisation;
- la Figure 3 est une vue en perspective de l'élément de structure selon un troisième mode de réalisation;
- La Figure 4 est une coupe suivant IV-IV de la figure 1;
- La figure 5 est une coupe suivant V-V de la figure 1.

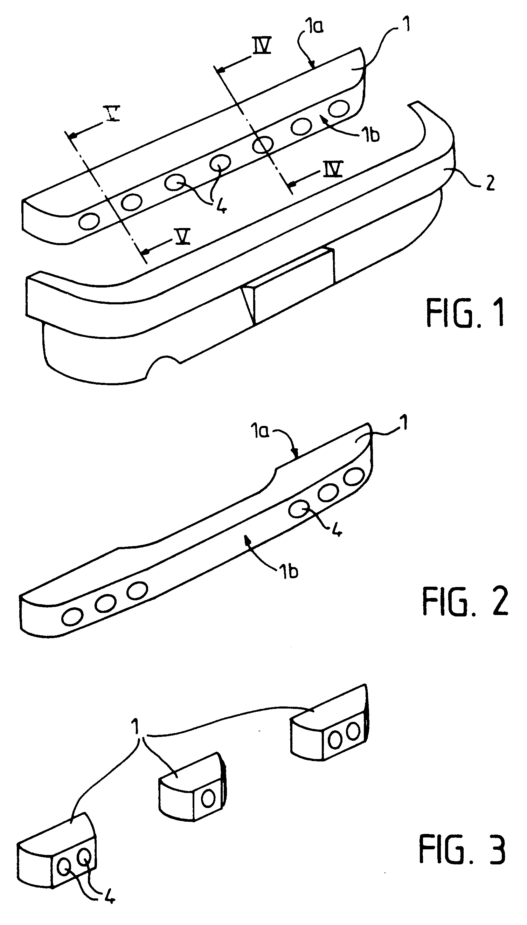

Sur la figure 1, on peut voir, suivant une vue éclatée, le pare-chocs constituée d'une part d'un élément de structure 1 destiné à prendre appui sur la caisse du véhicule et assurant les fonctions de résistance et d'absorption d'énergie du pare-chocs et d'autre part d'un élément extérieur 2 solidaire de l'élément de structure 1 et destiné à assurer les fonctions esthétiques et aérodynamiques du pare-chocs.

Selon ce premier mode de réalisation, l'élément de structure 1 est constitué par une poutre transversale fermée, creuse et présentant sur sa face d'appui la sur la caisse du véhicule, une première série de déformations tronconiques 3 et sur la face opposée 1b une deuxième série de déformations tronconiques 4, les troncs de cône 3 et 4 étant coaxiaux deux à deux et orientés dans le même sens de manière à ce que par exemple les troncs de cône 4 pénètrent à l'intérieur des troncs de cône 3. Les troncs de cône 3 et 4 sont de préférence, mais non obligatoirement, de révolution.

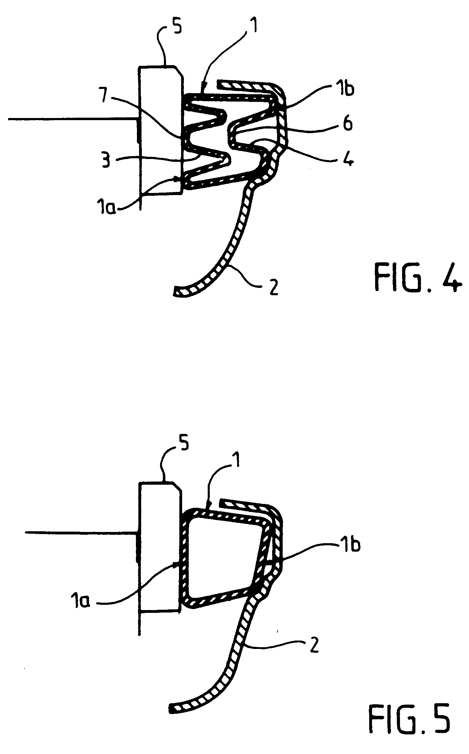

Cette poutre a donc selon sa section courante (figure 5) la forme d'un quadrilatère et présente des ensembles de déformations tronconiques 3 et 4 (figure 4) telles que par exemple, la petite base 6 des troncs de cône 4 soit située à l'intérieur de la poutre 1 tandis que les déformations tronconiques 3 prévues sur la face d'appui 1a sur la caisse 5 du véhicule sont telles que la petite base 7 des troncs de cône 3 coïncide avec la face 1a, de manière à ce que l'appui sur la caisse du véhicule se fasse à la fois par la face 1a et par les petites bases 7 des troncs de cône 3.

Une telle poutre peut être réalisée par des procédés tels que l'extrusion-soufflage ou le rotomoulage, à partir de matériaux comme le polyéthylène ou le polypropylène.

L'élément extérieur 2, réalisé en matière souple, est solidaire de cette poutre, par exemple par soudage.

Le pare-chocs peut alors être fixé sur la caisse du véhicule par des moyens non représentés, connus en soi, tels que des moyens de clippage.

Le principe d'absorption d'énergie d'un tel pare-chocs lors des chocs est le suivant:
- dans un premier temps, le pare-chocs et la poutre absorbent lors des sollicitations aux chocs, de l'énergie par déformation élastique des parois;
- par la suite, suivant l'importance des chocs, les zones de la poutre comportant les troncs de cône 3 et 4 travaillent en appui sur la structure de la caisse du véhicule et élèvent sensiblement la raideur d'intrusion tout en dissipant de l'énergie par frottement des parois tronconiques et par déformations lors de la pénétration des troncs de cône 4 à l'intérieur des troncs de cône 3.
- le stade ultime de travail de cette poutre-absorbeur d'énergie est la compression partielle ou totale des volumes des déformations tronconiques 3 et 4.

Le comportement élastique de cette poutre permet, lors des chocs non destructifs, un retour à leur état initial des déformations tronconiques 3 et 4. Elles assurent de plus une stabilité verticale et horizontale de flexion de l'ensemble pare-chocs.

Les figures 2 et 3 montrent deux autres modes de réalisation de la poutre.

A la figure 2, on peut voir quelles déformations tronconique 3 et 4 ne sont réalisées qu'aux deux extrémités de la poutre.

A la figure 3, la poutre est réalisée par des ensembles de petits absorbeurs d'énergie montés séparément sur la caisse du véhicule.

## Revendications

1. Pare-chocs pour véhicules automobiles constitué d'une part par un élément de structure (1) en matière composite et destiné à être monté par une face d'appui (1a) sur la structure de la caisse (5) du véhicule et d'autre part par un élément extérieur (2) solidaire de l'élément de structure et destiné à assurer la présentation esthétique et aérodynamique du pare-chocs, où l'élément de structure est constitué par au moins une pièce (1) creuse fermée présentant sur sa face d'appui (1a) sur la structure de caisse (5) du véhicule et sur la face opposée (1b) des déformations tronconiques (respectivement (3) et (4)), ces déformations étant coaxiales deux à deux, caractérisé en ce que elles sont orientées dans le même sens, de manière que les déformations (4) de la face opposée (1b) à la face d'appui (1a) pénètrent à l'intérieur des déformations (3) de la face d'appui (1a).

2. Pare-chocs selon la revendication 1, caractérisé en ce que l'élément de structure est constitué par une poutre transversale (1) dans laquelle sont répartis plusieurs ensembles de déformations tronconiques (3,4).

3. Pare-chocs selon la revendication 2, caractérisé en ce que la poutre est fractionnée en plusieurs pièces comportant un et/ou deux ensembles de déformations tronconiques (3,4).

4. Pare-chocs selon l'une quelconque des revendications 1 à 3, caractérisé en ce que la poutre (1) a suivant sa section courante la forme d'un quadrilatère et en ce que les déformations tronconiques (4) réalisées sur la face extérieure (1b) de la poutre sont telles que la petite base (6) des troncs de cône est située à l'intérieur de la poutre, tandis que les déformations tronconiques (3) réalisées sur la face (1a) de la poutre sont telles que la petite base (7) des troncs de cône (3) coïncide avec la face d'appui (1a), de telle manière que l'appui de la poutre (1) sur la caisse (5) du véhicule se fasse à la fois par sa face (1a) et les petites bases (7) des troncs de cône (3).

5. Pare-chocs selon l'une quelconque des revendications précédentes, caractérisé en ce que l'élément de structure (1), en matériau thermoplastique, est obtenu par un procédé d'extrusion-soufflage.

6. Pare-chocs selon l'une quelconque des revendications 1 à 4, caractérisé en ce que l'élément de structure (1), en matériau thermoplastique, est obtenu par un procédé de roto-moulage.

7. Pare-chocs selon l'une quelconque des revendications précédentes, caractérisé en ce que l'élément de présentation extérieure (2) est soudé sur l'élément de structure (1).

## Patentansprüche

1. Stoßfänger für Kraftfahrzeuge, der einerseits aus einem Strukturelement (1) aus Verbundmaterial besteht, welches mit einer Auflagefläche (1a) an der Struktur der Fahrzeugkarosserie (5) befestigt wird, und andererseits aus einem äußeren Element (2), das mit dem Strukturelement verbunden ist und die Ästhetik und die aerodynamischen Eigenschaften des Stoßfängers gewährleistet, wobei das Strukturelement aus wenigstens einem hohlen und geschlossenen Teil (1) besteht, das auf der an der Struktur der Fahrzeugkarosserie (5) aufliegenden Fläche (1a) sowie auf der gegenüberliegenden Fläche (1b) kegelstumpfartige Verformungen ((3) bzw. (4)) aufweist, wobei die Verformungen paarweise koaxial angeordnet sind, dadurch gekennzeichnet, daß sie derart in die selbe Richtung orientiert sind, daß die Verformungen (4) an der der Auflagefläche (1a) gegenüberliegenden Fläche (1b) in die Verformungen (3) an der Auflagefläche (1a) eindringen.

2. Stoßfänger nach Anspruch 1, dadurch gekennzeichnet, daß das Strukturelement aus einem Querträger (1) besteht, in dem mehrere Sätze kegelstumpfförmiger Verformungen (3, 4) verteilt sind.

3. Stoßfänger nach Anspruch 1, dadurch gekennzeichnet, daß der Träger aus mehreren Teilen besteht, welche ein und/oder zwei Sätze kegelstumpfförmiger Verformungen (3, 4) aufweisen.

4. Stoßfänger nach einem der Ansprüche 1 bis 3, dadurch gekennzeichnet, daß der Träger (1) einen viereckigen Normalquerschnitt besitzt, und daß die kegelstumpfförmigen Verformungen (4) an der äußeren Fläche (1b) des Trägers derart angebracht sind, daß sich die kleinen Grundflächen (6) der Kegelstümpfe im Inneren des Trägers befinden, während die an der Fläche (1a) befindlichen kegelstumpfförmigen Verformungen (3) derart angebracht sind, daß die kleinen Grundflächen (7) der Kegelstümpfe (3) mit der Auflagefläche (1a) übereinstimmen, wodurch der Träger (1) gleichzeitig über die Fläche (1a) und den kleinen Grundflächen (7) der Kegelstümpfe (3) an der Fahrzeugkarosserie (5) anliegt.

5. Stoßfänger nach einem der vorhergehenden Ansprüche, dadurch gekennzeichnet, daß das Strukturelement (1) aus thermoplastischem Werkstoff durch Extrusionsblasen hergestellt wird.

6. Stoßfänger nach einem der Ansprüche 1 bis 4, dadurch gekennzeichnet, daß das Strukturelement (1) aus thermoplastischem Werkstoff durch Rotationsschmelzverfahren hergestellt wird.

7. Stoßfänger nach einem der vorhergehenden Ansprüche, dadurch gekennzeichnet, daß das äußere Sichtelement (2) auf das Strukturelement (1) aufgeschweißt ist.

## Claims

1. A bumper for motor vehicles made up, on the one hand, of a structural component (1) made of composite material and intended to be mounted by a bearing face (1a) on the structure of the bodywork (5) of the vehicle and, on the other hand, of an external component (2) attached to the structural component and intended to ensure the aesthetic and aerodynamic presentation of the bumper, where the structural component is made up of at least one closed hollow part (1) having on its bearing face (1a) on the bodywork structure (5) of the vehicle and on the opposite face (1b) frustoconical deformations (respectively (3) and (4)), these deformations being in coaxial pairs, characterised in that they are orientated in the same direction, so that the deformations (4) of the opposite face (1b) to the bearing face (1a) penetrate inside the deformations (3) of the bearing face (1a).

2. A bumper according to claim 1, characterised in that the structural component is made up of a transverse beam (1) in which several sets of frustoconical deformations (3, 4) are distributed.

3. A bumper according to claim 2, characterised in that the beam is split up into several parts comprising one and/or two sets of frustoconical deformations (3, 4).

4. A bumper according to any one of claims 1 to 3, characterised in that the beam (1) has a cross section in the shape of a quadrilateral and in that the frustoconical deformations (4) formed on the outer face (1b) of the beam are such that the small base (6) of the cone frustums is situated inside the beam, whilst the frustoconical deformations (3) formed on the face (1a) of the beam are such that the small base (7) of the cone frustums (3) coincides with the bearing face (1a), in such a way that the bearing of the beam (1) on the bodywork (5) of the vehicle is effected at one and the same time by the face (1a) and the small bases (7) of the cone frustums (3).

5. A bumper according to any one of the preceding claims, characterised in that the structural component (1), made of thermoplastic material, is obtained by a process of extrusion-blowing.

6. A bumper according to any one of claims 1 to 4, characterised in that the structural component (1), made of thermoplastic material, is obtained by a process of rotational moulding.

7. A bumper according to any one of the preceding claims, characterised in that the external presentation component (2) is welded onto the structural component (1).
